# EUROPEAN PATENT SPECIFICATION

(11) **EP 2 032 421 B1**
(45) Date of publication and mention of the grant of the patent: **23.05.2012**
(21) Application number: 07748488.9
(22) Date of filing: 11.05.2007
(51) Int. Cl.: B62D 33/06

(54) **CAB TILT DEVICE**
FAHRERHAUSSCHWENKVORRICHTUNG
DISPOSITIF DE CABINE BASCULANTE

(30) Priority: 19.05.2006 SE 0601125
(43) Date of publication of application: 11.03.2009
(73) Proprietor: Scania CV AB (PUBL), 151 87 Södertälje (SE)
(72) Inventor: ÅKESON, Johan, S-640 61 Stallarholmen (SE); SKEPPSTRÖM, Tomas, S-151 35 Södertälje (SE)
(86) International application number: PCT/SE2007/050327
(87) International publication number: WO 2007/136341

(56) References cited:
- EP-A- 0 520 588
- EP-A1- 0 520 588
- EP-A2- 0 936 131
- EP-A2- 1 582 443
- WO-A1-01/25074
- GB-A- 1 399 612

## Description

### TECHNICAL FIELD

The invention relates to a tilt device for a pivotably supported vehicle cab, comprising a linear actuator which at a first end is supported for pivoting relative to a vehicle chassis and at a second end is adapted to being captured in an aperture of a hook on the cab and to acting upon the cab partly by pushing action between an initial state and a state of equilibrium of the cab and partly by pulling action between a tilted state and a state of equilibrium of the cab, wherein the hook is a double hook comprising a pressure hook for localising the second end during said pushing action and an opposite pull hook for localising the second end during said pulling action, and between the hooks there is a play for movement of the second end.

### BACKGROUND

Actuators of known cab tilt devices are often permanently connected between the vehicle chassis and the cab. This means that the actuator is affected by cab suspension movements, subjecting the actuator to severe wear. Moreover, the cab's suspension relative to the chassis may be impaired in that the inertia of the actuator increases resistance to the cab suspension on the side of the cab where the actuator is fitted.

EP-0520588-A1 refers to a device where the actuator's free end in the initial state is connected to the cab by a guide arm such as a leaf spring which is flexible in its plane and can by bending over curved surfaces guide the free end to engagement with the hook. In the case of that device, however, the actuator remains connected to the cab.

### SUMMARY OF THE INVENTION

An object of the invention is to provide a device of the kind indicated in the introduction where the actuator in an initial state can be entirely unconnected to the vehicle cab.

This is achieved by the features indicated in the claims set out below.

According to the invention, the actuator also has at its opposite end a spring which in the device's state of rest holds the actuator back against a stop in a direction whereby the free end remains free from the double hook even during the movements which may occur between the cab and the subframe/chassis when the vehicle is in motion. Thereby, it will possible for the second end to be securely captured by the double hook even if the cab has moved somewhat away from a normal posture.

Other features and advantages of the invention are indicated by the claims and the following description of an embodiment.

### BRIEF DESCRIPTION OF THE DRAWINGS

FIG. 1 is a partly cutaway view of a cab tilt device according to the invention as seen from underneath;
FIG. 2 depicts schematically the operation of a cab tilt device according to FIG. 1;
FIG. 3 is a partly cutaway view of a somewhat modified cab tilt device according to the invention as seen from underneath; and
FIGS. 4 and 5 depict schematically the operation of a cab tilt device according to FIG. 3.

### DETAILED DESCRIPTION OF AN EMBODIMENT

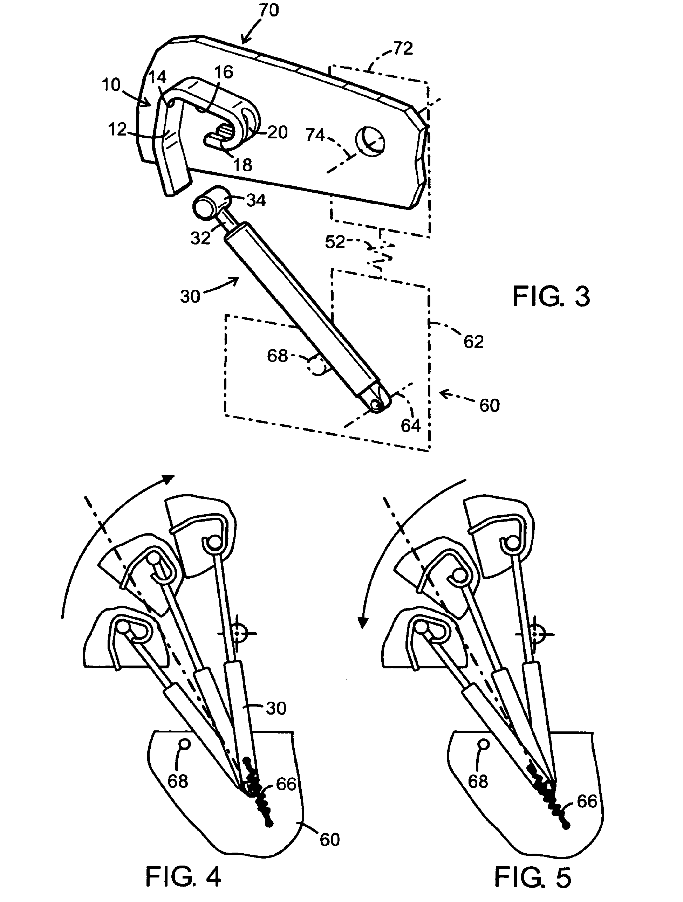

The drawing depicts partly schematically a cab tilt device according to the invention, fitted between a pivotably supported cab 70 and a vehicle chassis 60 in a not further depicted vehicle. There may be a cab suspension 52 (FIG. 3) between the cab and the chassis via a cab frame/cab subframe 72.

The tilt device comprises a linear actuator 30, e.g. a pneumatic cylinder, and a double hook 10 for accommodating a widened free end 34 of the actuator 30. The widened end 34 in the example depicted is a cam follower in the form of a transverse cylindrical spigot which engages with the double hook 10. The opposite end of the actuator is supported by a hinge connection 64 for pivoting relative to a frame section 62 of the chassis 60.

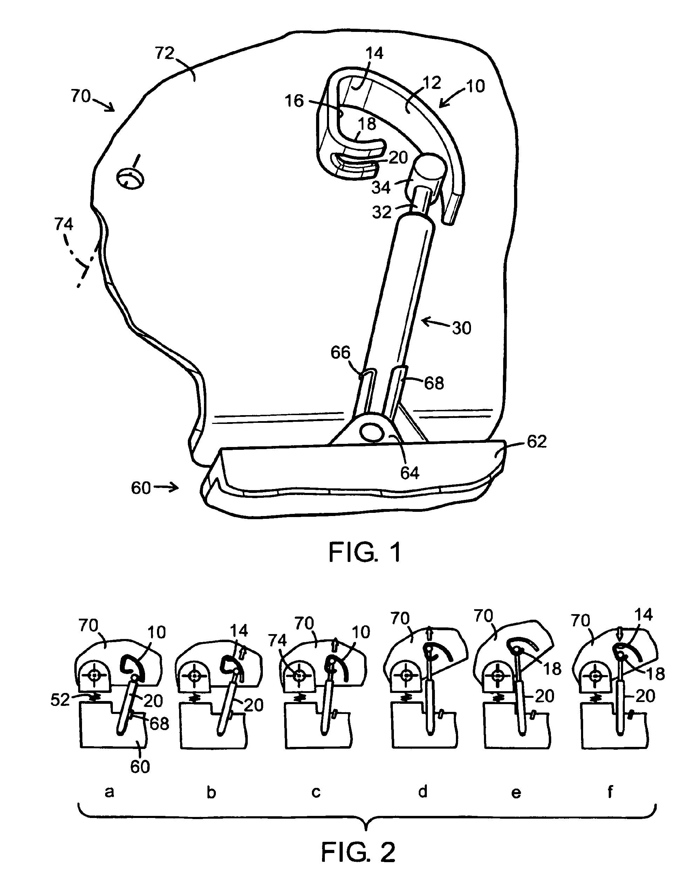

The actuator 30 also has at its opposite end in the example depicted in FIG. 1 a spring 66 which in the device's state of rest holds the actuator 30 back against a stop 68 in a direction whereby the free end 34 remains free from the double hook 10 even during the movements which may occur between the cab and the subframe/chassis 60 when the vehicle is in motion. The spring may also be of an undepicted bistable type which has a dead-point state and whose direction of springing reverses at approximately the stage when the cab 70 reaches the state of equilibrium described below (FIG. 2 d, f). A bistable spring arrangement is depicted in FIGS. 4 and 5, whereby a tension spring 66 connected between the actuator 30 and the chassis 60 endeavours on one side of an unstable direction (chain-dotted line) to pivot the actuator 30 towards the stop 68 and on the other side to pivot the actuator towards the cab 70. The same function may also be performed by a springloaded hinge (toggle joint) mechanism (with for example an undepicted pushing gas spring). The spring 66 is not indispensable, however, since the pivoting back of the actuator 30 may with advantage also be effected by adaptation of the geometry of the device so that the actuator 30 will, of itself, owing to low friction in the pivot joint 64, pivot back towards the stop 68 under the force of gravity as in the embodiment in FIG. 2.

The double hook 10 is firmly connected in a manner not depicted in more detail to a load-bearing element of the cab 70. The double hook 10 in the example depicted takes the form of a curved yoke with an initial guide surface 12 followed by a curved pressure hook 14 and a pull hook 18 which is situated opposite to and at a distance from the pressure hook 14 and has an aperture 20 for accommodating the piston rod 32 of the actuator 30 when the cam follower 34 is captured by the pull hook 18. A substantially planar linking surface 16 opposite to the aperture of the double hook 10 extends between the pressure hook 14 and the pull hook 18.

With reference to the states a-f schematically depicted in FIG. 2, the device is intended to work as follows:
a) The device is in an initial state with the cab 70 pivoted back. As already mentioned, the actuator 30 is free from contact with the double hook 10.
b) The actuator 30 is beginning its working movement. The cam follower 34 comes into contact with the guide surface and is guided by the guide surface in the double hook towards the pressure hook 14.
c) In the course of the working movement, the cam follower has now reached the pressure hook and starts raising the cab 70 for the tilt movement about a tilt spindle 74.
d) The cab 70 is about to pass its state of equilibrium, after which it will complete the tilt movement under the force of gravity without assistance from the actuator.
e) The cab 70 has now reached its tilted state where the cam follower is captured by the double hook's crooklike pull hook 18.
f) The actuator 30 has now begun its return movement to bring the cab 70 back to the pivoted-back state. The cab 70 is about to pass its state of equilibrium. When it does so, it catches up with the cam follower, which is released from the pull hook 18 and recaptured by the pressure hook 14, a state approximately corresponding to state d).

When the cab 70 has dropped to the fully pivoted-back state, the return movement of the actuator 30 continues, with the result that the cam follower leaves the pressure hook 14 and - under the influence, where applicable, of the spring 66 (FIG. 1 or 5) - disengages from the pull hook 18, follows the guide surface 12 for a short distance and reverts to the free-from-contact initial state a).

The cam follower need not have the circular cylindrical cross-sectional shape depicted, e.g. it may have a cross-section approximately shaped like a crook, i.e. with a counterhook to the pull hook 18 (not depicted).

The above detailed description is primarily intended to facilitate comprehension and no limitations of the invention are to be interpreted therefrom. The modifications which will be obvious to one skilled in the art from examining the description may be implemented without departing from the concept of the invention or the scope of the claims set out below.

## Claims

1. A tilt device for a pivotably supported vehicle cab (70), comprising a linear actuator (30) which at a first end is supported for pivoting relative to a vehicle chassis (60) and at a second end is adapted to being captured in an aperture of a hook (10) on the cab and to acting upon the cab partly by pushing action between an initial state and a state of equilibrium of the cab and partly by pulling action between a tilted state and a state of equilibrium of the cab, wherein the hook is a double hook (10) comprising a pressure hook (14) for localising the second end (34) during said pushing action and an opposite pull hook (18) for localising the second end (34) during said pulling action, and between the hooks there is a play for movement of the second end (34), characterised that the actuator (30) also has at its opposite end a spring (66) which in the device's state of rest holds the actuator (30) back against a stop (68) in a direction whereby the free end (34) remains free from the double hook (10) even during the movements which may occur between the cab and the subframe/chassis (60) when the vehicle is in motion.

2. A device according to claim 1, **characterised in that** the second end comprises a widened piston rod end (34) of the actuator (30).

3. A device according to any one of the previous claims, **characterised in that** the pull hook (18) has a recess (20) for accommodating a piston rod (32) of the actuator (30).

4. A device according to any one of the previous claims, **characterised in that** the device comprises a spring (66) adapted to holding the actuator (30) pivoted against a stop (68) in said initial state (a).

5. A device according to claim 4, **characterised in that** the spring (66) is also adapted, by bistable effect, to holding the actuator pivoted against the hook (10) in a state between the initial state and the state of equilibrium.

6. A device according to any one of the previous claims, **characterised in that** the hook (10) comprises an integrally formed yoke.

## Patentansprüche

1. Neigungsvorrichtung für eine schwenkbar angeordnete Fahrzeugkabine (70), aufweisend einen Linearaktuator (30), der an einem ersten Ende zum Schwenken relativ zu einem Fahrzeugchassis (60) angeordnet ist und dessen zweites Ende zur Aufnahme in einer Öffnung eines Hakens (10) der Kabine und zum teilweisen Angreifen an der Kabine zum Teil mittels einer Druckbetätigung zwischen einem Anfangszustand und einem Gleichgewichtszustand der Kabine und zum Teil einer Zugbetätigung zwischen einem geneigten Zustand und einem Gleichgewichtszustand der Kabine ausgebildet ist, wobei der Haken ein Doppelhaken (10) ist, der einen Druckhaken (14) zum Festlegen des zweiten Endes (34) während der Druckbetätigung und einen entgegengesetzten Zughaken (18) zum Festlegen des zweiten Endes (34) während der Zugbetätigung aufweist, wobei zwischen den Haken ein Bewegungsspiel des zweiten Endes (34) vorgesehen ist, **dadurch gekennzeichnet, dass** der Aktuator (30) an seinem entgegengesetzten Ende ebenfalls eine Feder (66) aufweist, die im Ruhezustand der Vorrichtung den Aktuator (30) gegen einen Anschlag (68) in einer Richtung zurückhält, wobei das freie Ende (34) auch während der Bewegungen frei von dem Doppelhaken (10) verbleibt, die zwischen der Kabine und dem Unterrahmen/Chassis (60) auftreten, wenn das Fahrzeug in Bewegung ist.

2. Vorrichtung gemäß Anspruch 1, **dadurch gekennzeichnet, dass** das zweite Ende ein geweitetes Kolbenstangenende (34) des Aktuators (30) aufweist.

3. Vorrichtung nach einem der voranstehenden Ansprüche, **dadurch gekennzeichnet, dass** der Zughaken (18) eine Ausnehmung (20) zum Aufnehmen einer Kolbenstange (32) des Aktuators (30) umfasst.

4. Vorrichtung gemäß einem der voranstehenden Ansprüche, **dadurch gekennzeichnet, dass** die Vorrichtung eine Feder (66) aufweist, die dazu ausgebildet ist, den Aktuator (30) in dem Ausgangszustand (a) geschwenkt gegen ein Anschlag (68) zu halten.

5. Vorrichtung nach Anspruch 4, **dadurch gekennzeichnet, dass** die Feder (66) dazu ausgebildet ist, durch eine bistabile Wirkung den Aktuator in einem Zustand zwischen dem Ausgangszustand und dem Gleichgewichtszustand geschwenkt gegen den Haken (10) zu halten.

6. Vorrichtung nach einem der voranstehenden Ansprüche, **dadurch gekennzeichnet, dass** der Haken (10) einen integral ausgebildeten Bügel aufweist.

## Revendications

1. Dispositif de basculement pour une cabine de véhicule (70) montée pivotante, comprenant un actionneur linéaire (30) qui, à une première extrémité, est supporté pour pivoter par rapport à un châssis de véhicule (60) et, à une seconde extrémité, est adapté pour être retenu dans une ouverture d'un crochet (10) prévu sur la cabine et pour agir sur la cabine en partie par une action de poussée entre un état initial et un état d'équilibre de la cabine et en partie par une action de traction entre un état basculé et un état d'équilibre de la cabine, dans lequel le crochet est un crochet double (10) comprenant un crochet de pression (14) servant à positionner la seconde extrémité (34) pendant ladite action de poussée et un crochet de traction opposé (18) servant à positionner la seconde extrémité (34) pendant ladite action de traction et, entre les crochets, est prévu un jeu pour le mouvement de la seconde extrémité (34), **caractérisé en ce que** l'actionneur (30) a aussi à son extrémité opposée un ressort (66) qui, dans l'état de repos du dispositif, maintient l'actionneur (30) en retour contre une butée (68) dans une direction qui est telle que l'extrémité libre (34) reste dégagée du crochet double (10), même pendant les mouvements qui peuvent se produire entre la cabine et l'infrastructure ou le châssis (60) lorsque le véhicule est en mouvement.

2. Dispositif selon la revendication 1, **caractérisé en ce que** la seconde extrémité comporte une extrémité de tige de piston élargie (34) de l'actionneur (30).

3. Dispositif selon une quelconque des revendications précédentes, **caractérisé en ce que** le crochet de traction (18) présente un évidement (20) destiné à recevoir une tige de piston (32) de l'actionneur (30).

4. Dispositif selon une quelconque des revendications précédentes, **caractérisé en ce que** le dispositif comprend un ressort (66) adapté pour maintenir l'actionneur (30) rabattu contre une butée (68) dans ledit état initial (a).

5. Dispositif selon la revendication 4, **caractérisé en ce que** le ressort (66) est aussi adapté, par un effet bistable, à maintenir l'actionneur rabattu contre le crochet (10) dans un état compris entre l'état initial et l'état d'équilibre.

6. Dispositif selon une quelconque des revendications précédentes, **caractérisé en ce que** le crochet (10) constitue un étrier formé en une seule pièce.
